# FASCICULE DE BREVET EUROPEEN

(11) **EP 1 510 037 B1**
(45) Date de publication et mention de la délivrance du brevet: **30.03.2011**
(21) Numéro de dépôt: 03757092.6
(22) Date de dépôt: 21.05.2003
(51) Int. Cl.: H04L 9/32

(54) **PROCEDE ET SYSTEME DE VERIFICATION DE SIGNATURES ELECTRONIQUES ET CARTE A MICROCIRCUIT POUR LA MISE EN OEUVRE DU PROCEDE**
VERFAHREN UND SYSTEM ZUM VERIFIZIEREN ELEKTRONISCHER SIGNATUREN UND MIKROSCHALTUNGSKARTE ZUR AUSFÜHRUNG DES VERFAHRENS
METHOD AND SYSTEM FOR VERIFYING ELECTRONIC SIGNATURES AND MICROCIRCUIT CARD FOR CARRYING OUT SAID METHOD

(30) Priorité: 05.06.2002 FR 0206915
(43) Date de publication de la demande: 02.03.2005
(73) Titulaire: FRANCE TELECOM, 75015 Paris (FR)
(72) Inventeur: PAILLES, Jean-Claude, F-14610 Epron (FR); BOUTROUX, Vincent, F-14880 Hermanville sur Mer (FR)
(74) Mandataire: Joly, Jean-Jacques
(86) Numéro de dépôt international: PCT/FR2003/001535
(87) Numéro de publication internationale: WO 2003/105399

(56) Documents cités:
- EP-A- 0 856 821
- WO-A-01/52470
- US-B1- 6 215 872

## Description

La présente invention concerne un procédé et un système de vérification de signatures électroniques et une carte à microcircuit permettant la mise en oeuvre de ce procédé.

Elle s'applique notamment, mais non exclusivement, à l'authentification d'informations, et à la vérification de signatures électroniques en vue d'autoriser certains traitements. Ces traitements consistent notamment à enregistrer des droits dans une carte à microcircuit électronique, par exemple dans des applications de ticket électronique de transport, ou de porte-monnaie électronique, ou encore de distribution de bons de réduction.

En effet, les cartes à microcircuit électronique, dites cartes à puce, sont utilisées généralement comme support informatique mobile pour des applications très diverses et exigeant pour la plupart d'entre elles un haut niveau de sécurité, notamment les opérations bancaires, les paiements sécurisés, l'accès aux bâtiments ou à des zones sécurisées et les télécommunications.

Lorsque l'on souhaite par exemple mettre à jour dans une carte à puce des données sensibles telles qu'un montant de recharge dans le cadre d'une application de porte-monnaie électronique, il est nécessaire que la carte soit en mesure de contrôler l'origine d'un ordre de mise à jour qu'elle reçoit. A cet effet, l'ordre de mise à jour est associé à une signature électronique dont l'identité du signataire est garantie par un certificat qui est également associé avec l'ordre de mise à jour.

Une signature électronique apposée sur un message est en général obtenue en appliquant une fonction de hachage au message pour en obtenir un condensé et en chiffrant ce condensé à l'aide d'une clé privée connue seulement du signataire. Pour vérifier une signature, il suffit donc de disposer de la clé publique correspondant à la clé privée utilisée, ainsi que de la fonction de hachage, d'appliquer la fonction de hachage au message, de déchiffrer la signature à l'aide de la clé publique, et de comparer le résultat fourni par la fonction de hachage avec le résultat fourni par le déchiffrement. Si ces deux résultats sont identiques, la signature est correcte.

Un certificat de clé publique, par exemple conforme à la norme X509 ou PKCS#6, est constitué de l'association d'une clé publique utilisée par une personne, d'informations d'identification de cette personne et de la définition d'une période de validité, l'association de ces informations étant rendue infalsifiable par une signature électronique apposée par une autorité de certification, cette signature utilisant une clé privée de l'autorité de certification. Pour vérifier un certificat, il suffit de disposer de la clé publique de l'autorité de certification correspondant à la clé privée utilisée, et d'utiliser cette clé publique pour contrôler que la signature électronique émane bien de l'autorité de certification. On peut ainsi s'assurer qu'une clé publique correspond à l'identité d'une personne déterminée. Toutefois, ce principe ne garantit pas que la personne qui utilise la clé privée correspondant à la clé publique est bien à celle identifiée dans le certificat. En général, les autorités de certification ne garantissent pas cette correspondance.

Pour garantir une telle correspondance, on a déjà proposé de mettre en place une organisation en chaîne ou pyramidale basée sur le concept de "chaînes de certificats" dans laquelle la signature électronique de chaque personne est certifiée par la signature d'une entité qui a été préalablement certifiée par une autre entité, et ainsi de suite jusqu'à une autorité de référence située au sommet de la pyramide. Dans une telle organisation, une signature s'appuie sur tous les certificats de toutes les clés publiques permettant de remonter la chaîne de certification jusqu'à l'autorité de référence. Pour vérifier une signature, il faut donc vérifier tous les certificats jusqu'à un certificat délivré par une entité connue dans la chaîne de certification. Il faut en outre que la clé publique de cette entité connue soit stockée d'une manière sûre et infalsifiable.

Les techniques à mettre en oeuvre pour gérer une telle organisation peuvent être facilement implantées dans un ordinateur personnel de type PC, notamment par l'intermédiaire de logiciels de navigation Internet qui intègrent tout ou partie de ces fonctions avec les protocoles SSL ("Secure Sockets Layer") et HTTPS ("Hypertext Transfer Protocol" intégrant SSL). Par contre, elles sont beaucoup plus difficiles à mettre en oeuvre dans une carte à puce qui possède une puissance de calcul et des capacités de stockage notablement plus limitées. En effet, les chaînes de certificats qu'il faut traiter sont très longues par rapport aux caractéristiques habituelles des cartes à puces. Ainsi, un certificat conforme à la norme X509 peut atteindre quelques kilo bits, et si la chaîne de certificats est longue, la carte doit pouvoir traiter et mémoriser une quantité d'informations trop importante par rapport à ses capacités.
Il convient de souligner à ce sujet qu'il n'est pas possible sans affecter la sécurité de faire exécuter de tels traitements par le terminal auquel la carte à puce est connectée ou d'utiliser la mémoire du terminal, car il serait alors facile de tromper la carte, notamment en changeant une clé publique par une autre.

On a déjà proposé d'introduire dans la mémoire de la carte à puce toutes les clés publiques des autorités de certification de la chaîne de certification. Toutefois, cette solution nécessite des capacités de mémoire importantes, compte tenu qu'une clé publique atteint couramment plus de un kilo bits. Il est en outre nécessaire que ces clés publiques soient stockées dans une zone mémoire sécurisée, pour éviter les risques de fraude consistant à introduire dans cette liste de clés publiques une clé non autorisée. Il s'avère qu'à l'heure actuelle, les microcircuits implantés dans les cartes à puce ne disposent pas d'autant de capacité mémoire sécurisée.

Le document US 6,215,872 décrit un procédé selon le préambule de la revendication 1. Le document EP 0 856 821 décrit une carte a puce dans laquelle sont stockées des clés.

La présente invention a pour but de supprimer ces inconvénients en proposant une organisation de données et de traitements entre une carte à puce et un terminal, permettant de minimiser les contraintes appliquées à la carte en termes de quantité de mémoire et de traitements nécessaires, sans pour autant affecter la sécurité du système dans lequel ils sont mis en oeuvre. Cet objectif est atteint par la prévision d'un procédé de vérification d'une signature électronique, selon la revendication 1.

Selon une autre particularité de l'invention, ce procédé comprend une phase de suppression d'un condensé de clé publique dans la table de certificats consistant à supprimer de la table de certificats le condensé d'une clé publique à retirer, et à supprimer tous les condensés de clés publiques de la table de certificats associés à un pointeur indiquant la clé publique à retirer.

De préférence, chaque condensé de clé publique inscrit dans la table de certificats est associé à une date de fin de validité, et en ce que la phase d'insertion d'une clé publique dans la table de certificats comprend en outre des étapes consistant à lire dans le certificat reçu une date de fin de validité de la clé publique à insérer, et à inscrire dans la table de certificats, en association avec le condensé de la clé publique à insérer, la date de fin de validité de la clé publique à insérer, si elle est antérieure à la date de fin de validité de la clé publique de l'entité de certification lue dans la table de certificats.

Egalement de préférence, chaque condensé de clé publique inscrit dans la table de certificats est associé à un compteur d'utilisation qui est incrémenté à chaque fois qu'une signature électronique est vérifiée à l'aide de la clé publique, et en ce qu'il comprend la suppression d'un condensé de clé publique dans la table de certificats lorsque le compteur d'utilisation est nul et que le nombre d'emplacements vides dans la table de certificats est inférieur à un seuil prédéterminé.

Egalement de préférence, chaque condensé de clé publique inscrit dans la table de certificats est associé à un compteur d'utilisation qui est incrémenté à chaque fois qu'une signature électronique est vérifiée à l'aide de la clé publique, à une date de dernière utilisation qui est mise à jour à chaque fois que le compteur d'utilisation associé est incrémenté, et en ce que lorsque le nombre d'emplacements vides dans la table de certificats est inférieur à un seuil prédéterminé, il comprend en outre une étape de sélection d'un condensé de clé publique à supprimer en fonction des valeurs respectives associées du compteur d'utilisation et de la date de dernière utilisation.

Avantageusement, le microcircuit utilise une fonction de hachage prédéfinie pour calculer des formes condensées de clés publiques.

Selon encore une autre particularité de l'invention, ce procédé comporte une phase d'insertion d'une clé publique racine dans la table de certificats, cette phase d'insertion étant effectuée par un traitement d'écriture contrôlée par un MAC calculé à l'aide d'une clé spécifique du microcircuit et connue uniquement d'une entité émettrice du microcircuit.

Avantageusement, le condensé d'une clé publique mémorisé dans la table de certificats est obtenu en calculant un condensé de la clé publique associée à d'autres informations comme la date de fin de validité de la clé publique, des informations d'identité, et de numéros de série, ces informations étant transmises au microcircuit à chaque vérification de signature à l'aide de la clé publique.

Avantageusement, le condensé d'une clé publique mémorisé dans la table de certificats est obtenu en calculant un condensé du certificat reçu par le microcircuit lors de l'insertion de la clé publique dans la table de certificats, ce certificat étant transmis au microcircuit à chaque vérification de signature à l'aide de la clé publique.

De préférence, la table de certificats est stockée dans une zone mémoire sécurisée du microcircuit.

L'invention concerne également une carte à microcircuit mettant en oeuvre le procédé défini ci-avant.

L'invention concerne également un système de vérification de signature électronique comprenant un microcircuit connectable à un système de traitement de données, pour la mise en oeuvre du procédé défini ci-avant.

Un mode de réalisation préféré de l'invention sera décrit ci-après, à titre d'exemple non limitatif, avec référence aux dessins annexés dans lesquels :
La figure 1 représente schématiquement un système dans lequel le procédé selon l'invention peut être mis en oeuvre ;
La figure 2 représente un arbre de certificats ;
La figure 3 représente une table de certificats telle qu'elle est mémorisée dans une carte à puce, selon l'invention ;
Les figures 4 à 6 représentent sous la forme d'organigrammes de différentes procédures qui sont exécutées par une carte à puce, selon l'invention ;
La figure 7 représente une variante selon l'invention de la table de certificats représentée sur la figure 3.

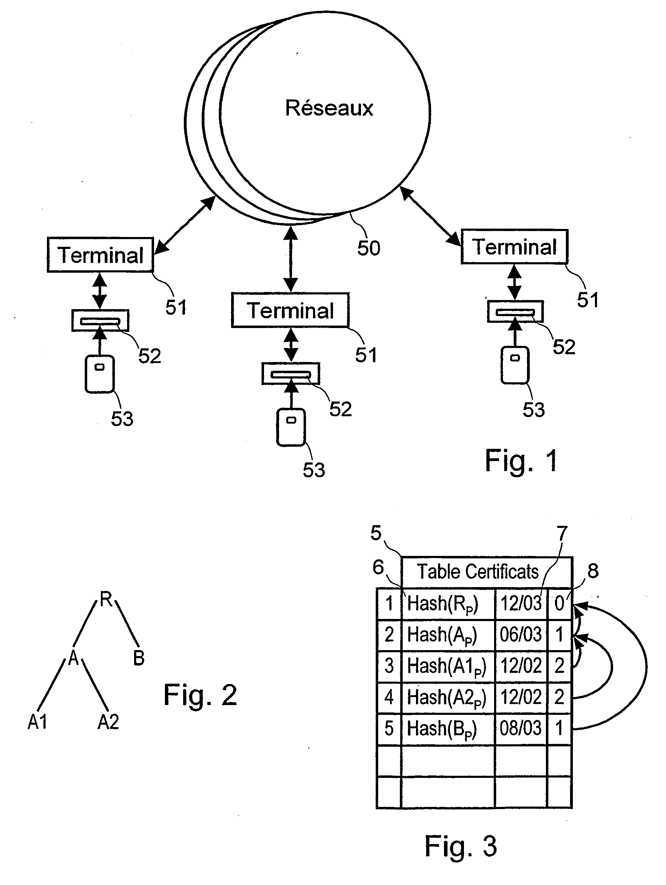

Le système représenté sur la figure 1 comprend une pluralité de terminaux 51 connectés à des réseaux 50 de transmission de données numériques. Ces terminaux sont conçus pour fournir différents services nécessitant d'être protégés contre les fraudes, tels que le rechargement de portes-monnaie électroniques, ou l'attribution d'un droit (par exemple de transport), ou encore pour l'échange sécurisé de données.
Par ailleurs, les utilisateurs du système disposent d'une carte personnelle, de type carte à microprocesseur 53, plus couramment appelée carte à puce, chaque terminal 51 étant équipé de moyens de communication 52, tels qu'un lecteur de carte à puce, pour communiquer avec le microprocesseur de la carte 53.
Pour qu'un utilisateur puisse accéder à un service tel que mentionné ci-avant, il doit posséder une carte à puce 53 dans laquelle se trouve mémorisé une clé publique attribuée au service. Cette clé publique lui permet de vérifier ou d'authentifier les signatures des différents terminaux grâce à une chaîne de certification.

La figure 2 représente un arbre de certificats de clés publiques comprenant plusieurs chaînes de certification. Cet arbre montre par des liens entre des clés que les clés publiques respectives d'entités A1 et A2 sont certifiées par une entité A, et que les clés publiques de l'entité A et d'une entité B sont certifiées par une entité R appelée "racine" du fait qu'elle est située à la racine de l'arbre.

Si l'on souhaite qu'un certificat émis par exemple par l'entité A2 et portant sur une clé publique d'une personne X, puisse être vérifié par une personne ne connaissant que l'autorité de certification R, il est nécessaire de lui transmettre l'ensemble d'une chaîne de certificats comprenant un certificat émis par l'autorité de certification R. Si l'on note <A,A1> un certificat émis par l'entité A et portant sur la clé publique d'une entité A1, une telle chaîne de certification est constituée des certificats suivants :
<A2,X><A,A2><R,A>.

Chaque certificat est constitué de la signature de l'autorité de certification apposée sur la clé publique à certifier, associée à des informations d'identification du titulaire de la clé publique à certifier et de l'autorité de certification, et éventuellement à des dates de début et de fin de validité. On a donc <R,A> = (Sig_{R}(Aₚ, Identité de A, Dates de début et de fin de validité), Identité de R), Aₚ représentant la clé publique de l'entité A.

Si dans l'exemple précédent, on souhaite qu'une signature Sigₓ(M) émise par la personne X et portant sur un message M, puisse être vérifiée par une personne ne connaissant que l'autorité de certification R, il est nécessaire d'associer à cette signature les certificats mentionnés précédemment :
Sigₓ(M)<A2,X><A,A2><R,A>

De cette manière, si l'on connaît la clé publique Rₚ, le certificat <R,A> fournit la clé publique Aₚ de l'entité A. Le certificat <A,A2> fournit la clé publique A2ₚ de l'entité A2, et le certificat <A2,X> fournit la clé publique Xₚ permettant de vérifier la signature Sig_{X}(M).

Lorsque l'on souhaite vérifier une signature et donc s'assurer de la validité d'une clé publique, ce processus implique la transmission d'une quantité importante d'informations et de nombreux traitements, ces contraintes étant incompatibles avec les capacités de stockage et de traitement d'une carte à puce.

Pour résoudre ce problème, la présente invention prévoit de stocker dans la mémoire de la puce, non pas les clés publiques des autorités de certification reconnues, mais un condensé de ces clés publiques, obtenu par exemple à l'aide d'une fonction dite de hachage, telle que MD4 ou 5 ("Message Digest"), SHA ("Secure Hash Algorithm") ou HMAC ("Hashed Message Authentication Code").
Ces clés condensées sont stockées sous la forme d'une table de certificats 5 telle que représentée sur la figure 3. Dans la table de certificats représentée sur cette figure, chaque condensé de clé publique Hash(Xₚ) 6 est associé à une date de fin de validité 7 du certificat correspondant, par exemple définie sous la forme <numéro de mois>/<année sur 2 chiffres>, et un pointeur 8 vers la ligne du tableau correspondant à la clé publique située en amont dans la chaîne de certification.

Ainsi, par exemple la clé A2p mémorisée sous forme condensée à la quatrième ligne du tableau est associé à une date de fin de validité égale à décembre 2002 et est rattachée à la ligne 2 du tableau dans laquelle se trouvent mémorisées les informations concernant la clé publique Aₚ. D'une manière générale, les pointeurs figurant dans la colonne de pointeurs 8 de la table 5 permettent donc de reconstituer l'arbre de certification représenté sur la figure 2.

Comme la clé racine Rₚ de l'arbre de certification n'est rattachée à aucune autre clé, elle est associée dans la table de certification à un pointeur nul.

Bien entendu, la table de certification selon l'invention peut contenir plusieurs arbres de certification indépendants, et donc plusieurs clés racine.

Outre le fait qu'elle réduit les ressources mémoire nécessaires, l'invention permet également de simplifier la gestion de cette mémoire sachant que la taille des clés est variable (elle est en général plus importante pour les clés racine que pour les autres clés), et qu'une fonction de hachage fournit une séquence binaire d'une longueur constante quelle que soit la taille de la séquence binaire appliquée en entrée de la fonction.

Conformément à l'invention, cette table de certificats 5 est associée à une procédure d'insertion d'une nouvelle clé certifiée par une clé figurant dans la table, une procédure de suppression d'une clé de la table, et une procédure de vérification de signature ayant utilisé une clé de la table, ces procédures étant stockées dans la mémoire programme de la carte à puce 53 et étant exécutables par l'unité de traitement de la carte, sur commande du terminal 51 relié à la carte.

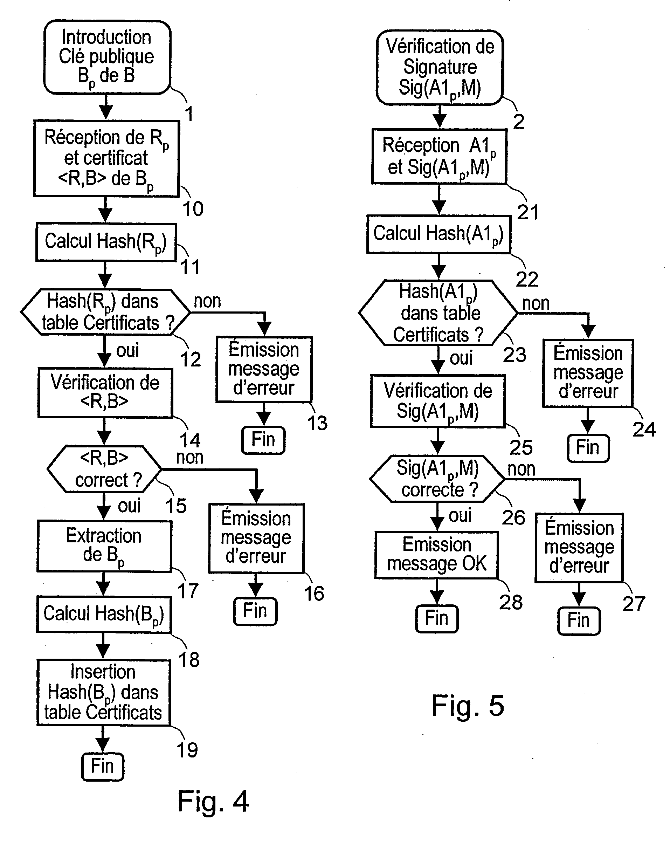

L'insertion d'une nouvelle clé dans la table de certificats 5 est effectuée par une procédure 1 illustrée schématiquement dans la figure 4.

A l'étape 10, cette procédure reçoit le certificat de la clé publique à insérer dans la table 5, <R,B> dans l'exemple représenté, associé à la clé publique Rₚ de l'autorité de certification qui a émis le certificat. A l'étape suivante 11, cette procédure calcule un condensé Hash(Rₚ) de la clé publique reçue Rₚ à l'aide d'une fonction de hachage prédéfinie, puis recherche 12 dans la table de certificats ce condensé de clé. Si ce condensé de clé Hash(Rₚ) ne figure pas dans la table de certificats 5, cette procédure renvoie 13 en réponse un message d'erreur. Dans le cas contraire, elle vérifie 14 le certificat en tentant de le déchiffrer à l'aide de la clé publique Rₚ. Si ce certificat n'est pas valide, c'est-à-dire s'il ne peut pas être déchiffré à l'aide de la clé publique Rₚ (étape 15), cette procédure renvoie 16 en réponse un message d'erreur. Dans le cas contraire, elle extrait 17 du certificat <R,B> la clé publique Bₚ à insérer dans la table de certificats, puis elle calcule 18 un condensé Hash(Bₚ) de cette clé publique à l'aide de la même fonction de hachage, et insère 19 la clé publique condensée obtenue dans la table de certificats. A l'étape 19, la procédure insère également dans la table 5 la date de fin de validité fournie par le certificat <R,B>, et insère dans la colonne 8 des pointeurs de la table de certificats, l'adresse ou le numéro de la ligne de la table correspondant à la clé publique Rₚ fournie avec le certificat <R,B> en entrée de la procédure, cette adresse ou ce numéro de ligne ayant par exemple été mémorisé à l'étape 12.

Lors de l'étape d'insertion de la nouvelle clé Bₚ dans la table, on peut s'assurer au préalable que la date de fin de validité de la nouvelle clé est antérieure à la date de fin de validité de la clé Rₚ à laquelle elle est rattachée par le certificat. Cette disposition vise à satisfaire le principe qu'une autorité ne peut pas attribuer des droits plus étendus que ceux dont elle dispose. Si cette date est postérieure à la date de fin de validité de la clé à laquelle elle est rattachée, on peut prévoir d'inscrire dans la table, la date la plus ancienne parmi ces deux dates. En variante, on peut décider pour des raisons de sécurité de ne pas inscrire la nouvelle clé dans la table et d'émettre un message d'erreur à destination du terminal.

La procédure 1 qui vient d'être décrite permet donc d'insérer dans la table une clé rattachée par un certificat à une autre clé dont le condensé se trouve déjà dans la table de certificats 5. Toute la sécurité du système de certification mis en oeuvre par la table de certificats et la procédure d'insertion d'une nouvelle clé dans la table, repose donc sur la procédure employée pour insérer une clé racine dans la table. Pour cette raison, l'insertion d'une clé racine doit être effectuée par une procédure assurant une protection suffisante. A cet effet, une telle procédure peut par exemple comprendre un traitement classique d'écriture contrôlée par un MAC (Message Authentication Code") calculé à l'aide d'une clé spécifique de la carte et connue uniquement de l'émetteur de la carte.

La figure 5 illustre schématiquement la procédure 2 de vérification de signature notée Sig(Aₚ,M) pour indiquer qu'elle est apposée au message M et a été générée à l'aide d'une clé privée correspondant à la clé publique Aₚ.

Cette procédure reçoit en entrée à l'étape 21 la signature à vérifier, par exemple Sig(A1ₚ,M) et la clé publique A1ₚ correspondant à la clé privée ayant été utilisée pour générer la signature.

A l'étape 22, cette procédure calcule un condensé Hash(A1ₚ) de la clé A1ₚ reçue, et à l'étape 23 recherche si ce condensé de clé se trouve dans la table de certificats 5. S'il ne s'y trouve pas, la carte ne peut pas vérifier la signature et retourne 24 un message d'erreur. Dans le cas contraire, elle vérifie 25 la signature en tenant de déchiffrer le condensé du message M à l'aide de la clé publique A1ₚ. Aux étapes suivantes 26, 27, 28, elle retourne un message donnant le résultat de la vérification.

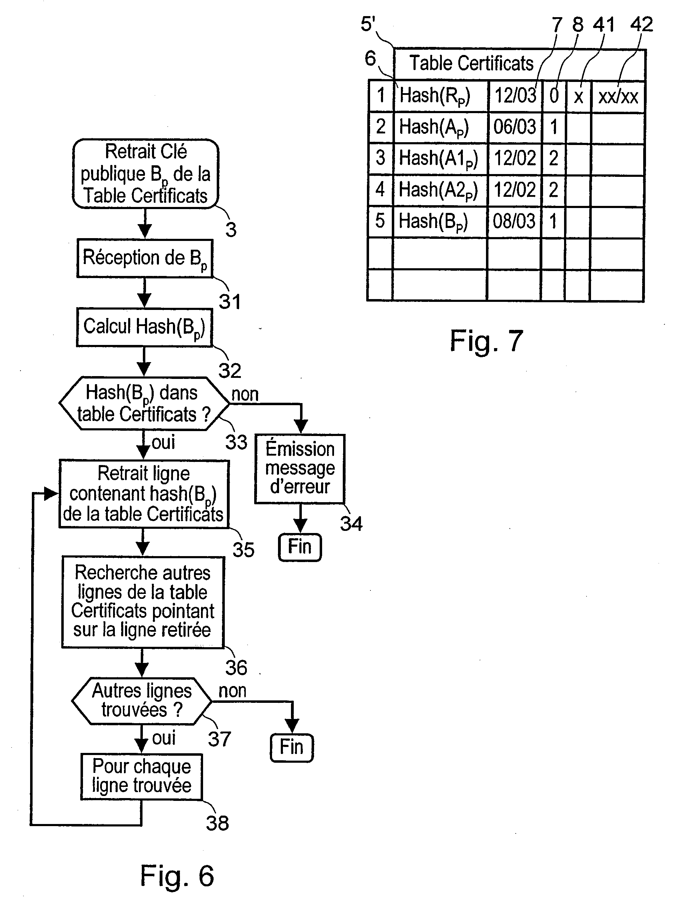

La figure 6 illustre schématiquement la procédure 3 de retrait d'une clé de la table de certificats 5. A l'étape 31, cette procédure reçoit en entrée la clé Bₚ à supprimer. Aux étapes 32 et 33, cette procédure calcule le condensé Hash(Bₚ) de la clé Bₚ et recherche le condensé de cette clé dans la table 5. Si la clé à supprimer n'est pas trouvée dans la table, cette procédure retourne 34 un message d'erreur. Dans le cas contraire, elle supprime toutes les informations figurant dans la ligne trouvée de la table 5. A l'étape suivante 36, elle recherche si d'autres clés doivent être retirées de la table 5 du fait qu'elles sont rattachées à la clé supprimée, c'est-à-dire si la table contient des pointeurs indiquant la ligne supprimée. Si d'autres clés doivent être supprimées (étape 37) de la table, cette procédure passe à l'étape 38 consistant à exécuter la procédure 3 à partir de l'étape 35 pour chacune des clés trouvées. De cette manière, si on retire la clé A de la table, on retire également, d'une manière automatique toutes les clés rattachées à A, c'est-à-dire dans l'exemple de la figure 2, les clés A1 et A2, ainsi que toutes les clés qui seraient rattachées à A1 ou A2.

Il est à noter que la procédure 3 peut être appelée régulièrement par l'unité de traitement de la carte, par exemple lorsque celle-ci reçoit la date courante, pour retirer de la table 5 toutes les clés qui ont expiré, c'est-à-dire qui ont une date de fin de validité antérieure à la date courante.

En outre, en fin de traitement de suppression, on peut prévoir de réorganiser la table 5 en décalant toutes les lignes non vides de la table vers le début de celle-ci de manière à éliminer toutes les lignes vides entre deux lignes non vides.

On peut remarquer que les procédures 1, 2, 3 qui viennent d'être décrites peuvent être exécutées en mode non connecté, c'est-à-dire qu'elles ne nécessitent pas l'intervention d'autres entités que la carte à puce 53 et le terminal 51 auquel celle-ci est raccordée, dès lors que le terminal dispose des certificats, signatures et clés publiques requis par ces procédures.

On peut également prévoir dans la table des certificats 5' une colonne 41 supplémentaire, destinée à recevoir des compteurs d'utilisation associés à chaque clé de la table (figure 7).
A chaque fois que la procédure 2 est exécutée pour vérifier une signature à partir d'une clé de la table, on incrémente de 1 le compteur correspondant, lequel a été initialisé à 0 lors de l'insertion de là clé dans la table, ainsi que tous les compteurs associés aux clés appartenant à la même chaîne de certification, situées en amont, c'est-à-dire entre la clé correspondant à la signature vérifiée et la clé racine de la chaîne de certification. A titre d'exemple, si la procédure 2 est appelée pour vérifier une signature à l'aide de la clé A1ₚ, les compteurs associés aux clés A1ₚ, Aₚ et Rₚ sont incrémentés.

Cette disposition permet de gérer plus efficacement la mémoire de la carte à puce 53 qui est limitée, en donnant une information sur l'utilisation de chaque clé de la table de certification en vue de retirer de la table de certification les clés qui n'ont jamais été utilisées. Le déclenchement de ce retrait peut être effectué le terminal 51. Dans ce cas, la procédure 1 comprend une étape d'émission d'un message "mémoire insuffisante" à destination du terminal lorsque le nombre de lignes vides de la table 5' est inférieur à un nombre prédéfini. On peut également prévoir que la procédure 1 déclenche ce retrait en en appelant la procédure 3 à l'étape 19.

Par ailleurs, si tous les compteurs de la table 5' sont non nuls et que la table est pleine, on peut prévoir de supprimer la clé associée à la valeur de compteur la plus faible. Si plusieurs clés dans la table 5' répondent à ce critère, la clé qui est choisie pour être retirée de la table peut être l'une de celles qui sont les plus éloignées d'une clé racine.

En outre, la table peut contenir une colonne 42 supplémentaire contenant la date de mise à jour de chaque compteur ou date de la dernière utilisation de la clé. De cette manière, on peut combiner un critère de nombre d'utilisation et un critère de date de dernière utilisation, ou appliquer l'un ou l'autre de ces deux critères pour sélectionner les clés à retirer de la table de certificats 5'. Selon les applications, on peut ainsi choisir de supprimer de la table la clé associée à une date de dernière utilisation la plus ancienne.

La table de certificats selon l'invention peut mémoriser d'autres informations sous forme condensée, telle que des informations d'identité, de numéro de série, de date de fin de validité, etc. Dans ce cas, ces informations doivent être transmises à la carte lors de l'appel des procédures 1, 2 et 3.

Selon une variante de l'invention, la table mémorise non pas un condensé des clés publiques des autorités de certification, mais un condensé de certificats émis par ces dernières et constituant l'arbre de certification. Ces certificats doivent alors être transmis à la carte lors de l'appel des procédures 1, 2 et 3.

## Revendications

1. Procédé de vérification d'une signature électronique, une signature électronique étant générée à l'aide d'une clé privée connue seulement d'une entité signataire et associée à une clé publique,
ledit procédé comprenant une étape de stockage d'une table de certificats (5, 5') contenant une forme condensée d'au moins une clé publique, et une phase (2) de vérification d'une signature électronique,
**caractérisé en ce que**
- le procédé fait intervenir un microcircuit (53) connectable à un système de traitement de données (51), le microcircuit étant conçu pour recevoir du système de traitement de données, des demandes de vérification de signatures électroniques et traiter ces demandes, la table de certificats (5, 5') étant stockée dans une mémoire du microcircuit (53)
- la phase (2) de vérification d'une signature électronique comporte les étapes consistant à :
- recevoir (21) par le microcircuit la signature électronique (Sig(A1ₚ,M)) à vérifier et une clé publique (A1ₚ) d'une paire de clés comprenant une clé privée ayant été utilisée pour générer la signature électronique à vérifier,
- calculer (22) une forme condensée (Hash(A1ₚ)) de la clé publique reçue, et rechercher (23) dans la table de certificats (5, 5') la forme condensée calculée de la clé publique, et
- déchiffrer (25) la signature électronique à l'aide de la clé publique reçue si la forme condensée calculée de la clé publique se trouve dans la table de certificats,
- le procédé comporte une phase (1) d'insertion d'une clé publique (Bₚ) dans la table de certificats (5, 5'), comprenant les étapes consistant à :
- recevoir (10) par le microcircuit (53) un certificat (<R,B>) de la clé publique (Bₚ) à insérer dans la table de certificats, et une clé publique (Rₚ) d'une entité de certification ayant généré le certificat, le certificat comprenant la clé publique à ajouter dans la table de certificats et une signature électronique de l'entité de certification, générée à l'aide d'une clé privée appartenant à une paire de clés comprenant la clé publique de l'entité de certification,
- calculer (11) par le microcircuit une forme condensée (Hash(Rₚ)) de la clé publique (Rₚ) reçue de l'entité de certification, et rechercher (12) dans la table de certificats la forme condensée calculée de la clé publique de l'entité de certification,
- déchiffrer (14) la signature électronique de l'entité de certification à l'aide de la clé publique reçue de l'entité de certification si la forme condensée calculée de la clé publique de l'entité de certification se trouve dans la table,
- extraire (17) du certificat la clé publique (Bₚ) à insérer si la signature électronique déchiffrée est correcte,
calculer (18) un condensé (Hash(Bₚ)) de la clé publique (Bₚ) extraite du certificat et insérer (19) le condensé calculé dans la table de certificats,dans lequel la phase (1) d'insertion d'une clé publique (Bₚ) dans la table de certificats (5, 5') comprend l'insertion, en association avec le condensé inséré de la clé publique, d'un pointeur (8) dans la table de certificats vers le condensé de la clé publique (Rₚ) de l'entité de certification qui a émis le certificat (<R,B>) de la clé publique (Bₚ) à insérer, de manière à définir un arbre de certification.

2. Procédé selon la revendication 1,
**caractérisé en ce qu'**il comprend une phase (3) de suppression d'un condensé (Hash(Bₚ)) de clé publique (Bₚ) dans la table de certificats (5, 5') consistant à supprimer de la table de certificats le condensé d'une clé publique à retirer, et à supprimer tous les condensés de clés publiques de la table de certificats associés à un pointeur (8) indiquant la clé publique (Bₚ) à retirer.

3. Procédé selon l'une des revendications 1 à 2,
**caractérisé en ce que** chaque condensé de clé publique inscrit dans la table de certificats (5, 5') est associé à une date de fin de validité (7), et **en ce que** la phase (1) d'insertion d'une clé publique (Bₚ) dans la table de certificats comprend en outre des étapes consistant à lire dans le certificat (<R,B>) reçu une date de fin de validité de la clé publique à insérer, et à inscrire dans la table de certificats, en association avec le condensé de la clé publique à insérer, la date de fin de validité de la clé publique (Bₚ) à insérer, si elle est antérieure à la date de fin de validité de la clé publique (Rₚ) de l'entité de certification lue dans la table de certificats.

4. Procédé selon l'une des revendications 1 à 3,
**caractérisé en ce que** chaque condensé de clé publique inscrit dans la table de certificats (5, 5) est associé à un compteur (41) d'utilisation qui est incrémenté à chaque fois qu'une signature électronique est vérifiée à l'aide de la clé publique, et **en ce qu'**il comprend la suppression d'un condensé de clé publique dans la table de certificats lorsque le compteur d'utilisation est nul et que le nombre d'emplacements vides dans la table de certificats est inférieur à un seuil prédéterminé.

5. Procédé selon l'une des revendications 1 à 4,
**caractérisé en ce que** chaque condensé de clé publique inscrit dans la table de certificats (5, 5') est associé à un compteur (41) d'utilisation qui est incrémenté à chaque fois qu'une signature électronique est vérifiée à l'aide de la clé publique, à une date de dernière utilisation (42) qui est mise à jour à chaque fois que le compteur d'utilisation associé est incrémenté, et **en ce que** lorsque le nombre d'emplacements vides dans la table de certificats est inférieur à un seuil prédéterminé, il comprend en outre une étape de sélection d'un condensé de clé publique à supprimer en fonction des valeurs respectives associées du compteur d'utilisation et de la date de dernière utilisation.

6. Procédé selon l'une des revendications 1 à 5,
**caractérisé en ce que** pour calculer des formes condensées de clés publiques, le microcircuit (53) utilise une fonction de hachage prédéfinie.

7. Procédé selon l'une des revendications 1 à 6,
**caractérisé en ce qu'**il comporte une phase d'insertion d'une clé publique racine (Rₚ) dans la table de certificats (5, 5'), cette phase d'insertion étant effectuée par un traitement d'écriture contrôlée par un MAC calculé à l'aide d'une clé spécifique du microcircuit (53) et connue uniquement d'une entité émettrice du microcircuit.

8. Procédé selon l'une des revendications 1 à 7,
**caractérisé en ce que** le condensé d'une clé publique mémorisé dans la table de certificats (5, 5') est obtenu en calculant un condensé de la clé publique associée à d'autres informations comme la date de fin de validité de la clé publique, des informations d'identité, et de numéros de série, ces informations étant transmises au microcircuit (53) à chaque vérification de signature à l'aide de la clé publique.

9. Procédé selon l'une des revendications 1 à 8, **caractérisé en ce que** le condensé d'une clé publique mémorisé dans la table de certificats (5, 5') est obtenu en calculant un condensé du certificat reçu par le microcircuit (53) lors de l'insertion de la clé publique dans la table de certificats, ce certificat étant transmis au microcircuit à chaque vérification de signature à l'aide de la clé publique.

10. Procédé selon l'une des revendications 1 à 9, **caractérisé en ce que** la table de certificats (5, 5') est stockée dans une zone mémoire sécurisée du microcircuit (53).

11. Carte à microcircuit (53), **caractérisée en ce qu'**elle comprend des moyens adaptés pour mettre en oeuvre le procédé selon l'une des revendications 1 à 10.

12. Système de vérification de signature électronique comprenant un microcircuit (53) connectable à un système de traitement de données (51), **caractérisé en ce qu'**il comprend des moyens pour mettre en oeuvre le procédé selon l'une des revendications 1 à 10.

## Claims

1. Method for verifying an electronic signature, an electronic signature being generated with the aid of a private key known only to a signatory entity and associated with a public key,
said method comprising a step of storing a table of certificates (5,5') containing a condensed form of at least one public key, and a phase (2) of verifying an electronic signature,
**characterized in that**
- the method involves a microcircuit (53) connectable to a data processing system (51), the microcircuit being designed to receive from the data processing system, requests for verifying electronic signatures and to process these requests, the table of certificates (5,5') being stored in a memory of the microcircuit (53),
- the phase (2) of verifying an electronic signature comprises the steps consisting in:
- receiving (21) by the microcircuit the electronic signature (Sig(A1ₚ,M)) to be verified and a public key (A1ₚ) of a pair of keys comprising a private key that has been used to generate the electronic signature to be verified,
- calculating (22) a condensed form (Hash(A1p)) of the public key received, and searching (23) through the table of certificates (5,5') for the calculated condensed form of the public key, and
- decrypting (25) the electronic signature with the aid of the public key received if the calculated condensed form of the public key is in the table of certificates,
- the method comprises a phase (1) of inserting a public key (Bₚ) into the table of certificates (5,5'), comprising the steps consisting in:
- receiving (10) by the microcircuit (53) a certificate (<R,B>) of the public key (Bₚ) to be inserted into the table of certificates, and a public key (Rₚ) of a certification entity that generated the certificate, the certificate comprising the public key to be added to the table of certificates and an electronic signature of the certification entity, generated with the aid of a private key belonging to a pair of keys comprising the public key of the certification entity,
- calculating (11) by the microcircuit a condensed form (Hash(Rₚ) of the public key (Rₚ) received from the certification entity, and searching (12) through the table of certificates for the calculated condensed form of the public key of the certification entity,
- decrypting (14) the electronic signature of the certification entity with the aid of the public key received from the certification entity if the calculated condensed form of the public key of the certification entity is in the table,
- extracting (17) from the certificate the public key (Bₚ) to be inserted if the decrypted electronic signature is correct,
calculating (18) a digest (Hash(Bₚ)) of the public key (Bₚ) extracted from the certificate and inserting (19) the calculated digest into the table of certificates, in which the phase (1) of inserting a public key (Bₚ) into the table of certificates (5,5') comprises the insertion, in association with the inserted digest of the public key, of a pointer (8) into the table of certificates, pointing to the digest of the public key (Rₚ) of the certification entity which has issued the certificate (<R,B>) of the public key (Bₚ) to be inserted, so as to define a certification tree.

2. Method according to Claim 1,
**characterized in that** it comprises a phase (3) of deleting a digest (Hash(Bₚ)) of public key (Bₚ) from the table of certificates (5,5') consisting in deleting from the table of certificates the digest of a public key to be withdrawn, and in deleting all the digests of public keys of the table of certificates that are associated with a pointer (8) indicating the publ ic key (Bₚ) to be withdrawn.

3. Method according to one of Claims 1 to 2,
**characterized in that** each public key digest registered in the table of certificates (5,5') is associated with an end-of-validity date (7), and **in that** the phase (1) of inserting a public key (Bₚ) into the table of certificates furthermore comprises steps consisting in reading in the certificate (<R,B>) received a date of end-of-validity of the public key to be inserted, and in registering in the table of certificates, in association with the digest of the public key to be inserted, the date of end-of-validity of the public key (Bₚ) to be inserted, if it is prior to the date of end-of-validity of the public key (Rₚ) of the certification entity read in the table of certificates.

4. Method according to one of Claims 1 to 3,
**characterized in that** each public key digest registered in the table of certificates (5,5') is associated with a usage counter (41) which is incremented each time that an electronic signature is verified with the aid of the public key, and **in that** it comprises the deletion of a public key digest from the table of certificates when the usage counted is zero and the number of empty locations in the table of certificates is less than a predetermined threshold.

5. Method according to one of Claims 1 to 4,
**characterized in that** each public key digest registered in the table of certificates (5,5') is associated with a usage counter (41) which is incremented each time that an electronic signature is verified with the aid of the public key, on a date of last use (42) which is updated each time that the associated usage counter is incremented, and **in that** when the number of empty locations in the table of certificates is less than a predetermined threshold, it furthermore comprises a step of selecting a public key digest to be deleted as a function of the associated respective values of the usage counter and of the date of last use.

6. Method according to one of Claims 1 to 5, **characterized in that** to calculate condensed forms of public keys, the microcircuit (53) uses a predefined hash function.

7. Method according to one of Claims 1 to 6, **characterized in that** it comprises a phase of inserting a root public key (Rₚ) into the table of certificates (5,5'), this insertion phase being performed by a write processing supervised by an MAC calculated with the aid of a specific key of the microcircuit (53) and know solely to an issuing entity of the microcircuit.

8. Method according to one of Claims 1 to 7, **characterized in that** the digest of a public key, stored in the table of certificates (5,5'), is obtained by calculating a digest of the public key associated with other information like the date of end-of-validity of the public key, identity information, and serial numbers, this information being transmitted to the microcircuit (53) upon each signature verification with the aid of the public key.

9. Method according to one of Claims 1 to 8, **characterized in that** the digest of a public key, stored in the table of certificates (5,5'), is obtained by calculating a digest of the certificate received by the microcircuit (53) during the insertion of the public key into the table of certificates, this certificate being transmitted to the microcircuit upon each signature verification with the aid of the public key.

10. Method according to one of Claims 1 to 9, **characterized in that** the table of certificates (5,5') is stored in a secure memory area of the microcircuit (53).

11. Microcircuit card (53), **characterized in that** it comprises means adapted for implementing the method according to one of Claims 1 to 10.

12. Electronic signature verification system comprising a microcircuit (53) connectable to a data processing system (51), **characterized in that** it comprises means for implementing the method according to one of Claims 1 to 10.

## Patentansprüche

1. Verfahren zur Verifizierung einer elektronischen Signatur, wobei eine elektronische Signatur mit Hilfe eines privaten Schlüssels erzeugt wird, der nur einer signierenden Einheit bekannt und einem öffentlichen Schlüssel zugeordnet ist,
wobei das Verfahren einen Schritt des Speicherns einer Tabelle von Zertifikaten (5, 5'), die eine kondensierte Form mindestens eines öffentlichen Schlüssels enthält, und eine Phase (2) der Verifizierung einer elektronischen Signatur enthält,
**dadurch gekennzeichnet, dass**
- das Verfahren eine Mikroschaltung (53) verwendet, die mit einem Datenverarbeitungssystem (51) verbunden werden kann, wobei die Mikroschaltung konzipiert ist, um vom Datenverarbeitungssystem Anforderungen zur Verifizierung von elektronischen Signaturen zu empfangen und diese Anforderungen zu verarbeiten, wobei die Tabelle von Zertifikaten (5, 5') in einem Speicher der Mikroschaltung (53) gespeichert ist,
- die Phase (2) der Verifizierung einer elektronischen Signatur die Schritte aufweist, die darin bestehen:
- Empfang (21), durch die Mikroschaltung, der zu verifizierenden elektronischen Signatur (Sig(A1ₚ,M)) und eines öffentlichen Schlüssels (A1ₚ) eines Paars von Schlüsseln, das einen privaten Schlüssel enthält, der verwendet wurde, um die zu verifizierende elektronische Signatur zu erzeugen,
- Berechnung (22) einer kondensierten Form (Hash(A1ₚ)) des empfangenen öffentlichen Schlüssels und Suche (23) in der Tabelle von Zertifikaten (5, 5') nach der berechneten kondensierten Form des öffentlichen Schlüssels, und
- Entschlüsselung (25) der elektronischen Signatur mit Hilfe des empfangenen öffentlichen Schlüssels, wenn die berechnete kondensierte Form des öffentlichen Schlüssels sich in der Tabelle von Zertifikaten befindet,
- das Verfahren eine Phase (1) des Einfügens eines öffentlichen Schlüssels (Bₚ) in die Tabelle von Zertifikaten (5, 5') aufweist, die die Schritte enthält, die darin bestehen:
- Empfang (10), durch die Mikroschaltung (53), eines Zertifikats (<R,B>) des in die Tabelle von Zertifikaten einzufügenden öffentlichen Schlüssels (Bₚ) und eines öffentlichen Schlüssels (Rₚ) von einer Zertifizierungseinheit, die das Zertifikat erzeugt hat, wobei das Zertifikat den zur Tabelle von Zertifikaten hinzuzufügenden öffentlichen Schlüssel und eine elektronische Signatur der Zertifizierungseinheit enthält, die mit Hilfe eines privaten Schlüssels erzeugt wurde, der zu einem Paar von Schlüsseln gehört, das den öffentlichen Schlüssel der Zertifizierungseinheit enthält,
- Berechnung (11), durch die Mikroschaltung, einer kondensierten Form (Hash(Rₚ)) des von der Zertifizierungseinheit empfangenen öffentlichen Schlüssels (Rₚ) und Suche (12) in der Tabelle von Zertifikaten nach der berechneten kondensierten Form des öffentlichen Schlüssels der Zertifizierungseinheit,
- Entschlüsselung (14) der elektronischen Signatur der Zertifizierungseinheit mit Hilfe des von der Zertifizierungseinheit empfangenen öffentlichen Schlüssels, wenn die berechnete kondensierte Form des öffentlichen Schlüssels der Zertifizierungseinheit sich in der Tabelle befindet,
- Entnahme (17) des einzufügenden öffentlichen Schlüssels (Bₚ) aus dem Zertifikat, wenn die entschlüsselte elektronische Signatur korrekt ist,
Berechnung (18) eines Kondensats (Hash(Bₚ)) des aus dem Zertifikat entnommenen öffentlichen Schlüssels (Bₚ) und Einfügen (19) des berechneten Kondensats in die Tabelle von Zertifikaten, wobei die Phase (1) des Einfügens eines öffentlichen Schlüssels (Bₚ) in die Tabelle von Zertifikaten (5, 5') das Einfügen, verbunden mit dem eingefügten Kondensat des öffentlichen Schlüssels, eines Hinweisers (8) in der Tabelle von Zertifikaten auf das Kondensat des öffentlichen Schlüssels (Rₚ) der Zertifizierungseinheit, die das Zertifikat (<R,B>) des einzufügenden öffentlichen Schlüssels (Bₚ) ausgegeben hat, enthält, um einen Zertifizierungsbaum zu definieren.

2. Verfahren nach Anspruch 1, **dadurch gekennzeichnet, dass** es einen Schritt (3) des Löschens eines Kondensats (Hash(Bₚ)) eines öffentlichen Schlüssels (Bₚ) aus der Tabelle von Zertifikaten (5, 5') enthält, der darin besteht, aus der Tabelle von Zertifikaten das Kondensat eines zu entfernenden öffentlichen Schlüssels zu löschen und alle Kondensate von öffentlichen Schlüsseln der Tabelle von Zertifikaten zu löschen, die einem Hinweiser (8) zugeordnet sind, der den zu entfernenden öffentlichen Schlüssel (Bₚ) anzeigt.

3. Verfahren nach einem der Ansprüche 1 bis 2, **dadurch gekennzeichnet, dass** jedes in die Tabelle von Zertifikaten (5, 5') eingetragene Kondensat eines öffentlichen Schlüssels einem Gültigkeitsablaufdatum (7) zugeordnet ist, und dass die Phase (1) des Einfügens eines öffentlichen Schlüssels (Bₚ) in die Tabelle von Zertifikaten außerdem Schritte enthält, die darin bestehen, im empfangenen Zertifikat (<R,B>) ein Gültigkeitsablaufdatum des einzufügenden öffentlichen Schlüssels zu lesen und in die Tabelle von Zertifikaten in Verbindung mit dem Kondensat des einzufügenden öffentlichen Schlüssels das Gültigkeitsablaufdatum des einzufügenden öffentlichen Schlüssels (Bₚ) einzutragen, wenn es vor dem Gültigkeitsablaufdatum des öffentlichen Schlüssels (Rₚ) der Zertifizierungseinheit liegt, das in der Tabelle von Zertifikaten gelesen wurde.

4. Verfahren nach einem der Ansprüche 1 bis 3, **dadurch gekennzeichnet, dass** jedes in die Tabelle von Zertifikaten (5, 5') eingetragene Kondensat eines öffentlichen Schlüssels einem Nutzungszähler (41) zugeordnet ist, der jedes Mal inkrementiert wird, wenn eine elektronische Signatur mit Hilfe des öffentlichen Schlüssels verifiziert wird, und dass es das Löschen eines Kondensats eines öffentlichen Schlüssels aus der Tabelle von Zertifikaten enthält, wenn der Nutzungszähler auf Null ist und die Anzahl von leeren Stellen in der Tabelle von Zertifikaten unter einer vorbestimmten Schwelle liegt.

5. Verfahren nach einem der Ansprüche 1 bis 4, **dadurch gekennzeichnet, dass** jedes in die Tabelle von Zertifikaten (5,5') eingetragene Kondensat eines öffentlichen Schlüssels einem Nutzungszähler (41) zugeordnet ist, der jedes Mal, wenn eine elektronische Signatur mit Hilfe des öffentlichen Schlüssels verifiziert wird, auf ein Datum der letzten Nutzung (42) inkrementiert wird, das jedes Mal aktualisiert wird, wenn der zugeordnete Nutzungszähler inkrementiert wird, und dass es, wenn die Anzahl von leeren Stellen in der Tabelle von Zertifikaten unter einer vorbestimmten Schwelle liegt, außerdem einen Schritt der Auswahl eines zu löschenden Kondensats eines öffentlichen Schlüssels in Abhängigkeit von den vereinten Werten des Nutzungszählers und des Datums der letzten Nutzung enthält.

6. Verfahren nach einem der Ansprüche 1 bis 5, **dadurch gekennzeichnet, dass** die Mikroschaltung (53) zur Berechnung der kondensierten Formen von öffentlichen Schlüsseln eine vordefinierte Hashfunktion verwendet.

7. Verfahren nach einem der Ansprüche 1 bis 6, **dadurch gekennzeichnet, dass** es eine Phase des Einfügens eines öffentlichen Wurzelschlüssels (Rₚ) in die Tabelle von Zertifikaten (5, 5') enthält, wobei diese Einfügungsphase durch eine Schreibverarbeitung durchgeführt wird, die von einem MAC gesteuert wird, der mit Hilfe eines spezifischen Schlüssels der Mikroschaltung (53) berechnet wird und nur einer Sendeeinheit der Mikroschaltung bekannt ist.

8. Verfahren nach einem der Ansprüche 1 bis 7, **dadurch gekennzeichnet, dass** das Kondensat eines öffentlichen Schlüssels, das in der Tabelle von Zertifikaten (5, 5') gespeichert ist, durch Berechnen eines Kondensats des öffentlichen Schlüssels erhalten wird, der anderen Informationen wie dem Gültigkeitsablaufdatum des öffentlichen Schlüssels, Identitätsinformationen und Seriennummern zugeordnet ist, wobei diese Informationen bei jeder Signaturverifizierung mit Hilfe des öffentlichen Schlüssels an die Mikroschaltung (53) übertragen werden.

9. Verfahren nach einem der Ansprüche 1 bis 8, **dadurch gekennzeichnet, dass** das Kondensat eines öffentlichen Schlüssels, das in der Tabelle von Zertifikaten (5, 5') gespeichert ist, durch Berechnen eines Kondensats des Zertifikats erhalten wird, das von der Mikroschaltung (53) bei der Einfügung des öffentlichen Schlüssels in die Tabelle von Zertifikaten empfangen wird, wobei dieses Zertifikat bei jeder Signaturverifizierung mit Hilfe des öffentlichen Schlüssels an die Mikroschaltung übertragen wird.

10. Verfahren nach einem der Ansprüche 1 bis 9, **dadurch gekennzeichnet, dass** die Tabelle von Zertifikaten (5, 5') in einer gesicherten Speicherzone der Mikroschaltung (53) gespeichert ist.

11. Chipkarte (53), **dadurch gekennzeichnet, dass** sie Einrichtungen enthält, die geeignet sind, um das Verfahren nach einem der Ansprüche 1 bis 10 anzuwenden.

12. System zur Verifizierung einer elektronischen Signatur, das eine Mikroschaltung (53) enthält, die mit einem Datenverarbeitungssystem (51) verbunden werden kann, **dadurch gekennzeichnet, dass** es Einrichtungen enthält, um das Verfahren nach einem der Ansprüche 1 bis 10 anzuwenden.
